# EUROPEAN PATENT SPECIFICATION

(11) **EP 0 145 167 B1**
(45) Date of publication and mention of the grant of the patent: **31.03.1993**
(21) Application number: 84307008.7
(22) Date of filing: 12.10.1984
(51) Int. Cl.: B23B 27/06, B23G 5/00, B23B 27/16

(54) **Improvements in or relating to thread cutting**
Gewindeschneiden
Filetage

(30) Priority: 14.10.1983 GB 8327581
(43) Date of publication of application: 19.06.1985
(73) Proprietor: STELLRAM LIMITED, Melksham SN12 6TP Wiltshire (GB)
(72) Inventor: Benson, Richard, Bradford-on-Avon Wiltshire (GB)
(74) Representative: Brooke-Smith, Fred

(56) References cited:
- EP-A- 0 062 621
- DE-A- 2 637 757
- DE-A- 3 033 626
- GB-A- 130 717
- GB-A- 2 096 509
- US-A- 1 410 451
- US-A- 2 954 570
- US-A- 4 233 867
- US-A- 4 375 708

## Description

This invention concerns the milling of screw-threads and more particularly relates to a thread-milling tool and methods of cutting threads on both cylindrical and tapering surfaces.

GB-A-130717 discloses a tool for chasing a preformed screw-thread comprising an elongate shank, a slot wherein is located and removably secured a flat cutting insert having a cutting edge which projects laterally of the shank and which is formed with a line of thread-form teeth, said teeth having a pitch line which, when viewed in a direction at right angles to the lengthwise dimension of the shank and on to a major face of the flat insert, extends parallel to or at an angle to the lengthwise dimension of the shank.

According to the present invention there is provided a rotary thread-milling tool comprising an elongate generally cylindrical shank having at its forward end a pocket wherein it is located and removably secured a flat or substantially flat cutting insert having a cutting edge projecting laterally of the shank which edge is formed with a line of thread-form teeth, said teeth having a pitch line which, when viewed in a direction at right angles to the axis of the shank and on to a major face of the flat insert, extends parallel to the lengthwise axis of the shank, characterised in that the teeth in said line are of identical profile and in that the pocket is in the general form of a rebate having in the bottom thereof a recess in which the insert is secured by a screw extending centrally through the insert into the bottom of the recess and which is of corresponding shape to the insert so as to receive and accurately to locate the insert in a fixed position with said line of teeth projecting and disposed parallel to the lengthwise axis of the shank, the top face of the insert being fully exposed.

The invention also provides a rotary thread-milling tool comprising an elongate generally cylindrical shank, a pocket wherein is located and removably secured a flat or substantially flat cutting insert having a cutting edge which projects laterally of the shank and is formed with a line of thread-form teeth, said teeth having a pitch line which, when viewed in a direction at right angles to the axis of the shank and on to a major face of the flat insert, is inclined relative to the lengthwise of the shank for forming a screw-thread on a conical surface of corresponding inclination, characterised in that said teeth are of identical profile.

In another aspect the invention provides a method of cutting an internal or external screw-thread on a cylindrical surface of a workpiece by means of a rotary thread-milling tool comprising an elongate generally cylindrical shank, a pocket wherein is located and removably secured a flat or substantially flat cutting insert having a cutting edge which projects laterally of the shank and which is formed with a line of thread-form teeth of identical profile, said teeth having a pitch line which, when viewed in a direction at right angles to the axis of the shank and on to a major face of the flat insert, extends parallel to the lengthwise axis of the shank, which method comprises the steps of mounting the workpiece in a fixed position, rotating the thread-milling tool about said lengthwise axis, moving the tool in a helical path about the axis of said cylindrical surface which axis is parallel to said lengthwise axis, said path being of such radius as to bring the teeth of the insert into cutting engagement with the cylindrical surface and, simultaneously with the rotation of the tool about said parallel axis, moving the tool axially a distance equal to the pitch of the screw-thread for each revolution of the tool about the workpiece.

The invention further provides a method of cutting an internal or external screw-thread on a conically inclined surface of a workpiece by means of a thread-milling tool comprising an elongate generally cylindrical shank, a pocket wherein is located and removably secured a flat or substantially flat cutting insert having a cutting edge which projects laterally of the shank and is formed with a line of thread-form teeth, said teeth having a pitch line which, when viewed in a direction at right angles to the axis of the shank and on to a major face of the flat insert, is inclined relative to the lengthwise axis of the shank so as to be parallel to said conically inclined surface and said teeth being of identical profile, which method comprises the steps of mounting the workpiece in a fixed position rotating the thread-milling tool about said lengthwise axis and moving the tool in a spiral path to bring the teeth of the tool into cutting engagement with said conically inclined surface, simultaneously with rotation of the tool moving the tool axially relative to the workpiece a distance equal to the axial pitch of the screw-thread for each revolution of said relative rotation, and varying the radius of said circular path continuously in dependence on the instantaneous axial positions of the tool relative to the conically inclined surface of the workpiece.

The teeth of the insert may be cut at an angle With respect to the two principal faces of the insert said angle Corresponding to the helix angle of the thread which is to be cut but it is preferred that the teeth be straight cut (i.e. at right angles to said Principal faces). In the latter case in particular the base of the recess may be parallel to the lengthwise axis of the shank, or may be angled at a small angle (say 1^{o} or 1½^{o}) to the said axis of the shank to incline the teeth at such an angle. Additionally or alternatively an anvil plate may be disposed between the insert and the base of the recess and may have its principal faces inclined to each other at the angle required to provide the appropriate helix angle.

In one preferred construction the insert is of flat triangular form. A set of teeth may be formed along more than one edge of the insert.

One embodiment of the invention will now be described by way of example with reference to the accompanying drawings in which:
Figures 1 and 2 are respectively a plan and a side elevation of a thread-cutting tool according to the invention,
Figure 3 is an end view in the direction of the arrow 3 in Figure 1,
Figures 4 and 5 illustrate the method according to the invention of using the tool of Figures 1 to 3 to cut internal and external threads respectively on a workpiece, and
Figure 6 further illustrates the method.

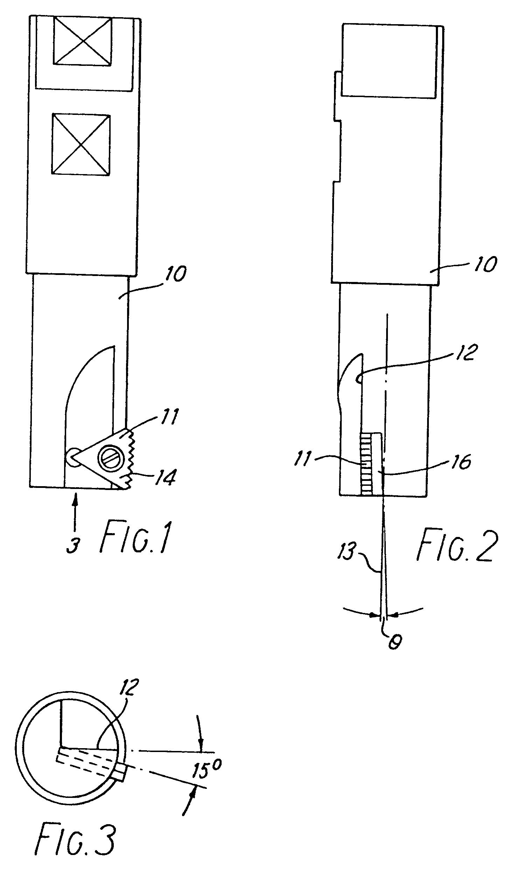

Referring to Figures 1 to 3, the tool comprises an elongate shank 10 and a triangular cutting insert 11 secured at the leading end portion of the shank. The root portions of the shank are shaped according to any suitable one of the standards used in tools for milling machines. The leading end portion of the shank has a rebate 12 having a flat bottom 12a cut in it and a flat-bottomed, substantially triangular recess is cut in the flat bottom 12a of the rebate and receives the insert 11. The flat bottom of the recess is inclined at a small angle 0 corresponding to the helix angle of the required thread, so that viewed from the side the bottom of the recess is skewed relative to the lengthwise axis 13 of the shank. 1½^{o} and 1^{o} have been found to be suitable values for ϑ, being a close approximation to the correct helix angle for a wide range of thread diameters, but in some cases ϑ may be 0^{o}, i.e. the bottom of the pocket is parallel to the axis 13. The insert is secured by a screw 14 extending through an aperture in the insert, and through an aperture in a triangular anvil plate 16 which in this arrangement is also disposed in the recess, into a threaded hole in the bottom of the recess. The anvil plate may be omitted.

In the tool shown in Figures 1 to 3, the anvil has parallel faces, but the recess may alternatively have its bottom wall parallel to the axis of the shank and either the anvil may have its principal faces inclined to each other at the required angle or the teeth of the insert may be cut at a small angle instead of being straight cut. It will be clear that combinations of these methods are also possible to achieve a required angular positioning of the teeth of the insert.

The insert itself is of flat plate form and in this example is of triangular outline, the teeth being identical to each other and complementary in profile to the teeth to be cut and being conveniently straight cut through the thickness of the plate material. The insert is disposed so that the pitch line of the teeth, viewed as in Figure 1, is parallel to the lengthwise axis of the shank.

Teeth may be formed along one or more of the edges of the insert to allow indexing of the insert when a set of teeth becomes worn. The insert and recess can be of any desired matching shape. The insert can be made in any variety of hard materials such as high speed steel, carbon steel, ceramics, carbide, coated carbide, titanium and silicon based materials.

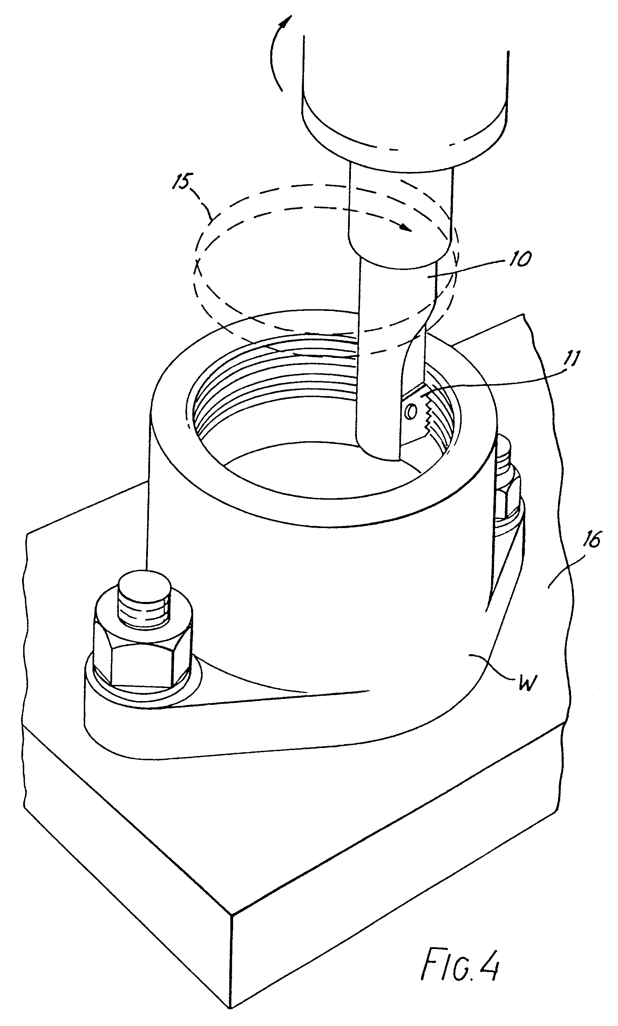

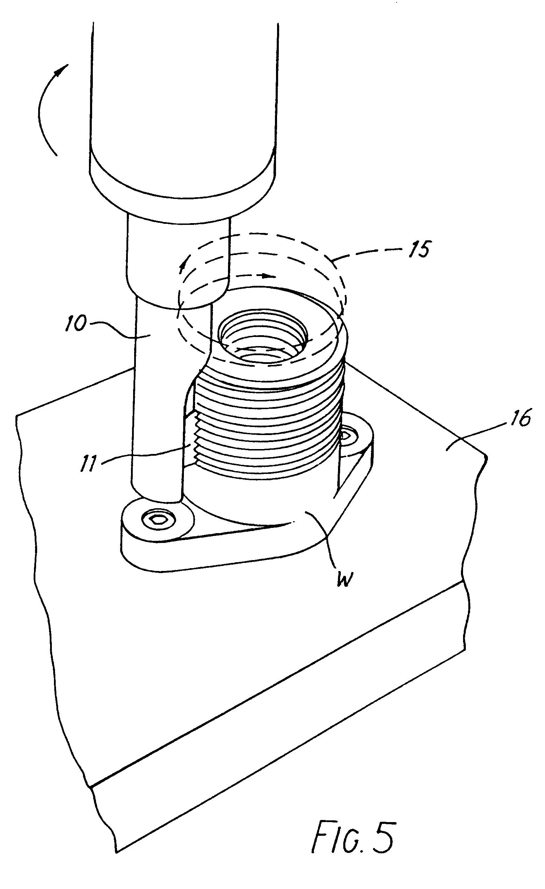

In use, the shank of the tool is mounted on and coaxially with the spindle of a milling machine, and the workpiece W is mounted on the work-table 17 of the machine as shown in Figures 4 and 5. The milling machine is preferably a numerically-controlled machine such that its spindle can be moved in a desired continuous path. The spindle is caused to move in a planar circular path about an axis parallel to that of the work-piece. The radius of the circular path is such that the insert comes into cutting engagement with the surface in which the thread is to be cut as the cutting tool rotates with the spindle. It will be understood that where the machine is of the preferred kind referred to above, the tool may move progressively into the required circular path, and thread-cutting commences with the cutting teeth in axially-overlapping relationship with the work-piece surface The rotational speed of the spindle is of course much higher than that of its circular movement. As the spindle rotates, the spindle head is moved axially by a distance equal to the thread pitch for each revolution of the tool in its circular path, as indicated by the chain line 15.

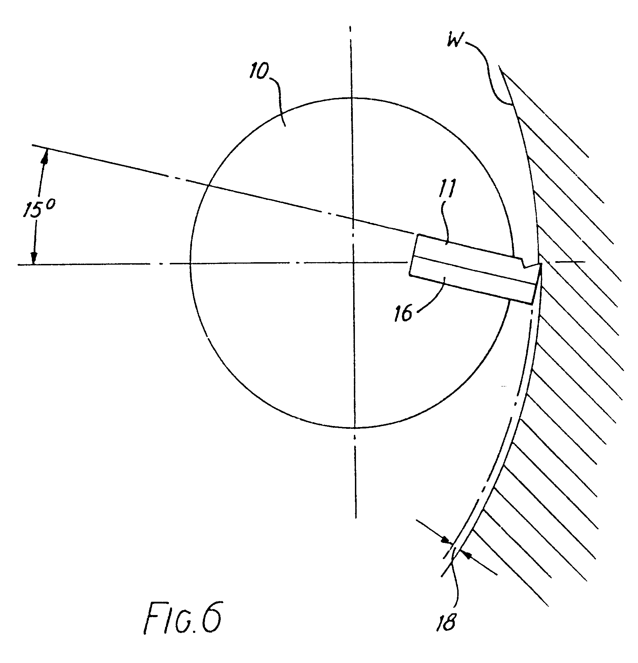

In order to avoid interference, particularly where an internal thread is being cut, and to provide an appropriate positive cutting angle the base of the recess is in this instance inclined at 15o relative to a common plane containing the spindle axis and the axis of said circular path as shown in Figure 6, the clearance being indicated at 18. The effect of this angle may be modified by grinding a desired rake angle on the cutting edge of the teeth.

Where the work-piece is to have a tapering thread applied to it, the line of cutting teeth will be inclined with respect to the lengthwise axis of the shank at an angle equal to the angle of the conically inclined surface of the workpiece to which the thread is to be applied, so that the line of teeth of the tool is parallel to said inclined surface, and a numerically-controlled milling machine is employed and is programmed to move the tool in a circle of continuously increasing or decreasing radius according to the direction of axial feed of the tool, as the tool is moved axially by the machine spindle.

## Claims

1. A rotary thread milling tool comprising an elongate generally cylindrical shank (10) having at its forward end a pocket wherein it is located and removably secured a flat or substantially flat cutting insert (11) having a cutting edge projecting laterally of the shank which edge is formed with a line of thread-form teeth, said teeth having a pitch line which, when viewed in a direction at right angles to the axis of the shank and on to a major face of the flat insert, extends parallel to the lengthwise axis (13) of the shank, characterised in that the teeth in said line are of identical profile and in that the pocket is in the general form of a rebate (12) having in the bottom thereof a recess in which the insert is secured by a screw extending centrally through the insert into the bottom of the recess and which is of corresponding shape to the insert so as to receive and accurately to locate the insert in a fixed position with said line of teeth projecting and disposed parallel to the lengthwise axis of the shank, the top face of the insert being fully exposed.

2. A tool as claimed in claim 1, characterised in that sid teeth of identical profile are straight cut.

3. A tool as claimed in claim 2, characterised in that the plane on the surface of the pocket which supports the insert is inclined at a small angle (0) to the lengthwise axis of the shank substantially equal to the helix angle of the thread.

4. A tool as claimed in claim 2, further characterised by an anvil plate (16) disposed between said surface of the pocket and the insert, the arrangement being such that the plane of the surface of the anvil (16) against which the insert (11) is secured is inclined at said small angle (ϑ) to the lengthwise axis (13) of the shank.

5. A tool as claimed in any one of the preceding claims, characterised in that a plurality of edges of the insert are formed each with a line of teeth of identical profile.

6. A method of cutting an internal or external screw-thread on a cylindrical surface of a workpiece (W) by means of a rotary thread-milling tool comprising an elongate generally cylindrical shank (10), a pocket wherein is located and removably secured a flat or substantially flat cutting insert (11) having a cutting edge which projects laterally of the shank and which is formed with a line of thread-form teeth of identical profile, said teeth having a pitch line which, when viewed in a direction at right angles to the axis of the shank and on to a major face of the flat insert, extends parallel to the lengthwise axis (13) of the shank, which method comprises the steps of mounting the workpiece in a fixed position, rotating the thread-milling tool about said lengthwise axis, moving the tool in a helical path about the axis of said cylindrical surface which axis is parallel to said lengthwise axis, said path being of such radius as to bring the teeth of the insert into cutting engagement with the cylindrical surface and, simultaneously with the rotation of the tool about said parallel axis, moving the tool axially a distance equal to the pitch of the screw-thread for each revolution of the tool about the workpiece.

7. A rotary thread-milling tool comprising an elongate generally cylindrical shank (10), a pocket wherein is located and removably secured a flat or substantially flat cutting insert (11) having a cutting edge which projects laterally of the shank and is formed with a line of thread-form teeth, said teeth having a pitch line which, when viewed in a direction at right angles to the axis of the shank and on to a major face of the flat insert, is inclined relative to the lengthwise of the shank for forming a screw-thread on a conical surface of corresponding inclination, characterised in that said teeth are of identical profile.

8. A method of cutting an internal or external screw-thread on a conically inclined surface of a work-piece by means of a thread-milling tool comprising an elongate generally cylindrical shank, a pocket wherein is located and removably secured a flat or substantially flat cutting insert having a cutting edge which projects laterally of the shank and is formed with a line of thread-form teeth, said teeth having a pitch line which, when viewed in a direction at right angles to the axis of the shank and on to a major face of the flat insert, is inclined relative to the lengthwise axis of the shank so as to be parallel to said conically inclined surface and said teeth being of identical profile, which method comprises the steps of mounting the work-piece in a fixed position rotating the thread-milling tool about said lengthwise axis and moving the tool in a spiral path to bring the teeth of the tool into cutting engagement with said conically inclined surface, simultaneously with rotation of the tool moving the tool axially relative to the work-piece a distance equal to the axial pitch of the screw-thread for each revolution of said relative rotation, and varying the radius of said circular path continuously in dependence on the instantaneous axial positions of the tool relative to the conically inclined surface of the work-piece.

## Patentansprüche

1. Drehendes Gewindeschneidwerkzeug, bestehend aus einem länglichen, im allgemeinen zylindrischen Schaft (10), der an seinem vorderen Ende eine Tasche aufweist, worin ein flacher, oder im wesentlichen flacher Schneideinsatz (11) angeordnet und entfernbar befestigt ist, der eine Schneidkante aufweist, die seitlich vom Schaft vorragt, wobei die Kante mit einer Reihe von Gewindeform aufweisenden Zähnen versehen ist und wobei diese Zähne eine Gewindesteigungslinie besitzen, die sich, in rechtem Winkel zu der Achse des Schaftes und zu einer Hauptfläche des flachen Einsatzes gesehen, parallel zu der Längsachse (13) des Schaftes erstreckt, dadurch gekennzeichnet, daß die Zähne in dieser Linie ein identisches Profil aufweisen und die Tasche die allgemeine Form eines Falzes (12) aufweist, in dessen Boden eine Vertiefung ausgebildet ist, in dem der Einsatz durch eine Schraube befestigt ist, die durch die Mitte des Einsatzes in den Boden der Vertiefung geht und eine dem Einsatz entsprechende Form aufweist, so daß der Einsatz in einer in bezug auf die vorstehende und parallel zu der Längsachse des Schaftes angeordneten Zahnreihe feststehenden Position aufgenommen und exakt angeordnet wird, wobei die Oberfläche des Einsatzes vollständig freiliegt.

2. Werkzeug nach Anspruch 1, dadurch gekennzeichnet, daß die Zähne mit identischem Profil gerade geschnitten sind.

3. Werkzeug nach Anspruch 2, dadurch gekennzeichnet, daß die Ebene an der Oberfläche der Tasche, die den Einsatz trägt, mit einem geringen Winkel (0) zu der Längsachse des Schaftes geneigt ist, der dem Schrägungswinkel des Gewindes im wesentlichen gleich ist.

4. Werkzeug nach Anspruch 2, gekennzeichnet durch eine Amboßplatte (16), die zwischen der Oberfläche der Tasche und dem Einsatz angeordnet ist, wobei die Anordnung derart ist, daß die Ebene der Oberfläche des Ambosses (16), an welcher der Einsatz (11) befestigt ist, mit einem geringen Winkel (0) zu der Längsachse (13) des Schaftes geneigt ist.

5. Werkzeug nach einem der vorangehenden Ansprüche, dadurch gekennzeichnet, daß eine Mehrzahl von Kanten des Einsatzes jeweils mit einer Reihe von Zähnen mit identischem Profil ausgebildet ist.

6. Verfahren zum Scheiden eines Innen- oder Außengewindes an einer zylindrischen Oberfläche eines Werkstückes (W) mittels eines drehenden Gewindeschneidwerkzeuges, bestehend aus einem länglichen, im allgemeinen zylindrischen Schaft (10), einer Tasche, worin ein flacher, oder im wesentlichen flacher Schneideinsatz (11) angeordnet und entfernbar befestigt ist, der eine Schneidkante aufweist, die seitlich vom Schaft vorragt und mit einer Reihe von Gewindeform aufweisenden Zähnen mit identischen Profilen ausgebildet ist, wobei diese Zähne eine Gewindesteigungslinie besitzen, die sich, in rechtem Winkel zu der Achse des Schaftes und zu einer Hauptfläche des flachen Einsatzes gesehen, parallel zu der Längsachse (13) des Schaftes erstreckt, wobei das Verfahren aus folgenden Schritten besteht:
- Befestigen des Werkstückes in einer feststehenden Position,
- Drehen des Gewindeschneidwerkzeuges um die Längsachse,
- Bewegen des Werkzeuges in einer schraubenförmigen Bahn um die Achse der zylindrischen Oberfläche, wobei die Achse parallel zu der Längsachse liegt und die Bahn einen solchen Radius aufweist, daß die Zähne des Einsatzes mit der zylindrischen Oberfläche in schneidenden Eingriff gebracht werden, und, gleichzeitig mit der Drehung des Werkzeuges um die parallele Achse,
- Bewegen des Werkzeuges in axialer Richtung um eine Strecke, die der Gewindesteigung des Gewindes für jede Drehung des Werkzeuges um das Werkstück gleich ist.

7. Drehendes Gewindeschneidwerkzeug, bestehend aus einem länglichen, im allgemeinen zylindrischen Schaft (10), einer Tasche, worin ein flacher, oder im wesentlichen flacher Schneideinsatz (11) angeordnet und entfernbar befestigt ist, der eine Schneidkante aufweist, die seitlich vom Schaft vorragt und mit einer Reihe von Gewindeform aufweisenden Zähnen versehen ist, wobei diese Zähne eine Gewindesteigungslinie besitzen, die, in rechtem Winkel zu der Achse des Schaftes und zu einer Hauptfläche des flachen Einsatzes gesehen, in bezug auf die Längsachse des Schaftes geneigt ist zur Bildung eines Gewindes an einer konischen Oberfläche mit entsprechender Neigung, dadurch gekennzeichnet, daß die Zähne ein identisches Profil aufweisen.

8. Verfahren zum Scheiden eines Innen- oder Außengewindes an einer konisch geneigten Oberfläche eines Werkstückes mittels eines Gewindeschneidwerkzeuges, bestehend aus einem länglichen, im allgemeinen zylindrischen Schaft, einer Tasche, worin ein flacher, oder im wesentlichen flacher Schneideinsatz angeordnet und entfernbar befestigt ist, der eine Schneidkante aufweist, die seitlich vom Schaft vorragt und mit einer Reihe von gewindeförmigen Zähnen ausgebildet ist, wobei diese Zähne eine Gewindesteigungslinie besitzen, die in rechtem Winkel zu der Achse des Schaftes und zu einer Hauptfläche des flachen Einsatzes gesehen, in bezug auf die Längsachse des Schaftes geneigt ist, so daß sie parallel zu der konisch geneigten Oberfläche ist, und die Zähne ein identisches Profil aufweisen und wobei das Verfahren aus folgenden Schritten besteht:
- Befestigen des Werkstückes in einer feststehenden Position,
- Drehen des Gewindeschneidwerkzeuges um die Längsachse, und
- Bewegen des Werkzeuges in einer spirallinienförmigen Bahn, um die Zähne des Einsatzes mit der konisch geneigten Oberfläche in schneidenden Eingriff zu bringen, und, gleichzeitig mit der Drehung des Werkzeuges,
- Bewegen des Werkzeuges in axialer Richtung in bezug auf das Werkstück um eine Strecke, die der axialen Gewindesteigung des Gewindes für jede Drehung dieser relativen Drehung gleich ist, und
- kontinuierliche Veränderung des Radius dieser kreisförmigen Bahn, abhängig von den augenblicklichen axialen Positionen des Werkzeuges in bezug auf die konisch geneigte Oberfläche des Werkstückes.

## Revendications

1. Outil rotatif à fraiser les filets comprenant un corps allongé globalement cylindrique (10) comportant à son extrémité avant une poche dans laquelle est situé et fixé de façon à pouvoir être démonté un élément rapporté de taillage (11) pratiquement plat ayant une arête de taillage qui se projette latéralement à partir de la tige, laquelle arête est constituée par une ligne de dents en forme de filet, lesdites dents ayant une ligne primitive de référence qui, lorsque l'on regarde dans une direction à angle droit par rapport à l'axe de la tige et par rapport à une face principale de l'élément rapporté plat, s'étend parallèlement à l'axe longitudinal (13) du corps, caractérisé en ce que les dents dans ladite ligne ont un profil identique et en ce que la poche a une forme globale d'embrèvement (12) comportant au fond une encoche dans laquelle l'élément rapporté est fixé par une vis qui s'étend au centre au travers de l'élément rapporté dans le fond de l'encoche, et qui est d'une forme correspondante à celle de l'élément rapporté de façon à recevoir et à positionner avec précision l'élément rapporté dans une position fixe par rapport à ladite ligne de dents qui se projette et qui est disposée parallèlement à l'axe longitudinal du corps, la face supérieure de l'élément rapporté étant complètement mise à nue.

2. Outil tel que revendiqué à la revendication 1, caractérisé en ce que les dents de flanc de profil identique sont usinées droites.

3. Outil tel que revendiqué à la revendication 2, caractérisé en ce que le plan de la face de la poche qui supporte l'élément rapporté est incliné d'un angle faible (O) par rapport à l'axe longitudinal du corps qui est pratiquement égal à l'angle d'hélice du filet.

4. Outil tel que revendiqué à la revendication 2, caractérisé en outre par une plaque d'enclume (16) disposée entre ladite face de la poche et l'élément rapporté, l'aménagement étant tel que le plan de la surface de l'enclume (16) sur lequel l'élément rapporté (11) est fixé est incliné dudit angle faible (Θ) par rapport à l'axe longitudinal (13) du corps.

5. Outil comme revendiqué dans l'une quelconque des revendications précédentes, caractérisé en ce qu'une pluralité d'arêtes de l'élément rapporté sont constitués chacun par une ligne de dents de profil identique.

6. Procédé de taillage d'un filetage interne ou externe sur une face cylindrique d'une pièce d'oeuvre (W) au moyen d'un outil rotatif à fraiser les filets comprenant un corps allongé globalement cylindrique (10), une poche dans laquelle est située et fixée de façon à pouvoir être démontée un élément rapporté de taillage plat, ou pratiquement plat, (11) ayant une arête de taillage qui se projette latéralement à partir de la tige et qui est constitué par une ligne de dents en forme de filet d'un profil identique, lesdites dents ayant une ligne primitive de référence qui, lorsqu'on la regarde dans une direction à angle droit par rapport à l'axe de la tige et par rapport à une face principale de l'élément rapporté plat, s'étend parallèlement à l'axe longitudinal (13) de la tige, lequel procédé comprend les étapes de montage de la pièce d'oeuvre dans une position fixe, de rotation de l'outil à fraiser les filets autour dudit axe longitudinal, de déplacement de l'outil suivant un parcours hélicoïdal autour de l'axe de ladite face cylindrique, lequel axe est parallèle audit axe longitudinal, ledit parcours étant d'un rayon propre à amener les dents de l'élément rapporté à venir en contact pour usinage de la face cylindrique et, simultanément avec la rotation de l'outil autour dudit axe parallèle, de déplacement de l'outil suivant l'axe à une distance égale au pas du filetage pour chaque tour de l'outil sur la pièce d'oeuvre.

7. Outil rotatif à fraiser les filets comprenant un corps allongé globalement cylindrique (10), une poche dans laquelle est situé et fixé de façon à pouvoir être démonté un élément rapporté de taillage plat, ou pratiquement plat, (11) comportant une arête de taillage qui se projette latéralement à partir de la tige et est formé d'une ligne de dents en forme de filet, lesdites dents ayant une ligne primitive de référence qui, lorsqu'on la regarde dans une direction à angle droit par rapport à l'axe de la tige et par rapport à une face principale de l'élément rapporté plat, est inclinée par rapport à la direction longitudinale de la tige pour former un filetage sur une surface conique d'inclinaison correspondante, caractérisé en ce que lesdites dents ont un profil identique.

8. Procédé de taillage d'un filetage interne ou externe sur une face inclinée conique d'une pièce d'oeuvre au moyen d'un outil à fraiser les filets comprenant un corps allongé globalement cylindrique, une poche dans laquelle est situé et fixé de façon à pouvoir être démonté un élément rapporté de taillage plat, ou pratiquement plat, ayant une arête de taillage qui se projette latéralement à partir de la tige et est constitué d'une ligne de dents en forme de filet, lesdites dents ayant une ligne primitive de référence qui, lorsqu'on la regarde dans une direction à angle droit par rapport à l'axe de la tige et par rapport à une face principale de l'élément rapporté plat est inclinée par rapport à l'axe longitudinal de la tige de façon à être parallèle à ladite surface conique inclinée et lesdites dents étant de profil identique, lequel procédé comprend les étapes de montage de la pièce d'oeuvre dans une position fixe, de rotation de l'outil à fraiser les filets autour dudit axe longitudinal et de déplacement de l'outil dans un parcours en spirale pour amener les dents de l'outil en contact d'usinage avec ladite surface conique inclinée, simultanément avec la rotation de l'outil le déplacement de l'outil axialement par rapport à la pièce d'oeuvre d'une distance égale au pas axial du filetage pour chaque tour de ladite rotation relative, et la variation du rayon dudit parcours circulaire en continu suivant les positions instantanées axiales de l'outil par rapport à la surface conique inclinée de la pièce d'oeuvre.
